# EUROPEAN PATENT SPECIFICATION

(11) **EP 2 169 896 B1**
(45) Date of publication and mention of the grant of the patent: **12.03.2014**
(21) Application number: 08784037.7
(22) Date of filing: 19.08.2008
(51) Int. Cl.: H04L 12/24, H04L 29/08, H04L 12/28

(54) **METHOD, DEVICES AND SYSTEM FOR DATA SYNCHRONIZATION OF A CONTROL SESSION**
VERFAHREN, VORRICHTUNGEN UND SYSTEM ZUM DATENABGLEICH IN EINER STEUERUNGS-SESSION
PROCÉDÉ, DISPOSITIFS ET SYSTÈME POUR UNE SYNCHRONISATION DE DONNÉES D'UNE SESSION DE COMMANDE

(30) Priority: 21.08.2007 CN 200710147346
(43) Date of publication of application: 31.03.2010
(73) Proprietor: Huawei Technologies Co., Ltd., Longgang District, Shenzhen Guangdong 518129 (CN)
(72) Inventor: YANG, Zhenting Huawei Technologies Co., Ltd., Shenzhen 518129 (CN)
(74) Representative: Kreuz, Georg Maria
(86) International application number: PCT/CN2008/072046
(87) International publication number: WO 2009/024083

(56) References cited:
- EP-A2- 1 592 184
- WO-A1-2008/086644
- CN-A- 1 708 755
- CN-A- 1 852 312
- JP-A- 2004 247 919
- US-A1- 2002 141 563
- US-A1- 2004 044 799
- SANJAY WADHWA JUNIPER NETWORKS DEREK HARKNESS JUNIPER NETWORKS THOMAS HAAG T-SYSTEMS: "Control Plane Graceful Restart extensions for ANCP; draft-wadhwa-ancp-graceful-restart-00.txt" IETF STANDARD-WORKING-DRAFT, INTERNET ENGINEERING TASK FORCE, IETF, CH, 4 July 2006 (2006-07-04), XP015048625 ISSN: 0000-0004
- JIM BOYLE LEVEL 3 RON COHEN CISCO DAVID DURHAM INTEL SHAI HERZOG IPHIGHWAY RAJU RAJAN AT&T ARUN SASTRY CISCO THE COPS (COMMON OPEN: "The COPS (Common Open Policy Service) Protocol; draft-ietf-rap-cops-07.txt" IETF STANDARD-WORKING-DRAFT, INTERNET ENGINEERING TASK FORCE, IETF, CH, vol. rap, no. 7, 16 August 1999 (1999-08-16), XP015026205 ISSN: 0000-0004

## Description

### Field of the Invention

The present invention relates to the network communication field, and in particular, to a method, device and system for synchronizing data in a control session.

### Background of the Invention

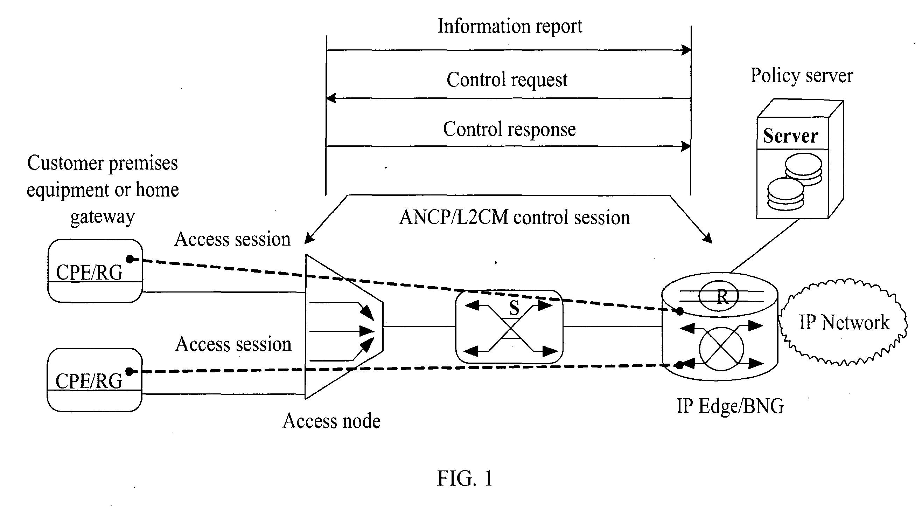

With the development of next generation networks, network control and management, especially the control on some network nodes that interwork closely, have become increasingly important. Because the network node control has a strong real-time requirement, the former control performed through the coordination of a network management system (NMS) does not meet the network node control requirements in the future. Thus, the network nodes that interwork closely are controlled via protocols. Generally, a control session is established between two network nodes, and then control data is transmitted between the two network nodes through the control session. A layer 2 control mechanism (L2CM) is a control mechanism. The Access Node Control Protocol (ANCP) is the protocol that implements the L2CM. FIG. 1 shows a structure of the L2CM/ANCP.

The L2CM/ANCP includes two equivalent function entities (control session nodes), that is, a control function and a report execution function. The control function is integrated into a network access server (NAS) device, for example, a broadband network gateway (BNG), a broadband remote access server (BRAS) or an Internet Protocol (IP) edge. The report execution function is integrated into access nodes, such as a digital subscriber line access multiplexer (DSLAM). The control function controls and manages the report execution function via ANCP; for example, it configures parameters for the report execution function. The report execution function responds to a control request, and reports certain state information to the control function, such as interface state information (subscriber line bandwidth).

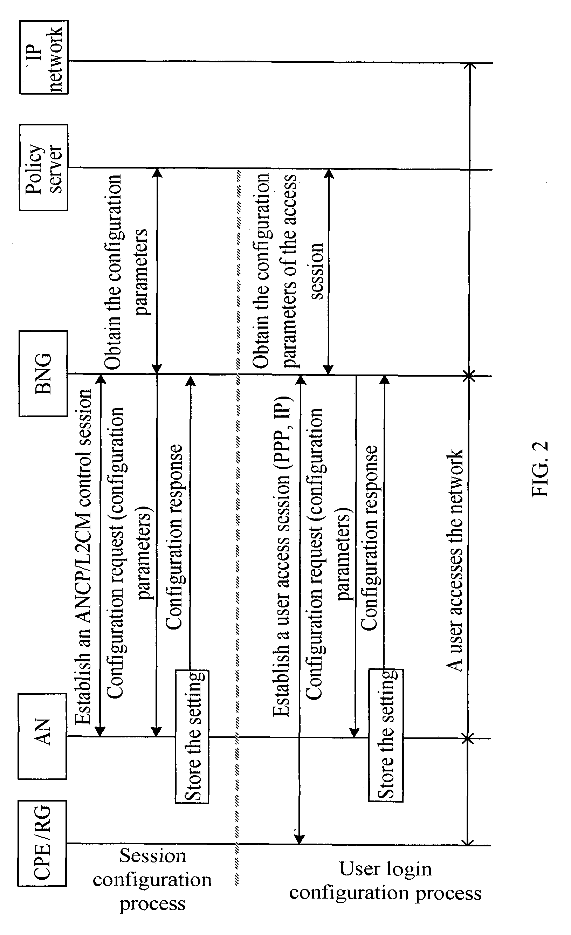

Some specified configuration processes of the ANCP are shown in FIG. 2, including two configuration processes: session configuration process and user login configuration process.

The ANCP/L2CM is an equipment control protocol or mechanism. In practical applications, the control session may be disconnected or restarted. During the user access session, the configuration and state may be unsynchronized if the ANCP/L2CM control session is disconnected or restarted, which may affect the user access session.

EP 1592184 A2 discloses a method for transmitting data for data synchronization between a server and a client. If a data synchronization session in a network is abnormally terminated, the client stores state information of data to be transmitted, which indicates states of the data at the time of the abnormal termination, The state information of the data makes it possible to resume the data transmission beginning with data items that were being transmitted at the time of the abnormal termination, Since one of the server and the client transmits only data that has not been received by the other, it is possible to decrease the time necessary to complete the data synchronization.

Sanjay Wadhwa Juniper Networks Derek Harkness Juniper Networks Thomas Haag T-Systems: "Control Plane Graceful Restart extensions for ANCP; draft-wadhwa-ancp-graceful-restart-00.txt" IETF Standard-Working-Draft, Internet Engineering Task Force, IETF, CH, 4 July 2006 describes proposed extensions to ANCP (Access Node Control Protocol) for supporting a graceful state resynchronization between NAS and AN upon control plane restart.

Jim Boyle Level 3 Ron Cohen Cisco David Durham Intel Shai Herzog IPHighway Raju Rajan AT&T Arun Sastry Cisco The Cops (Common Open "The COPS (Common Open Policy Service) Protocol; draft-ietf-rap-cops-07.txt" IETF Standard Working-Draft, Internet Engineering Task Force, IETF, CH, vol. rap, no. 7, 16 August 1999 describes a simple client/server model for supporting policy control over QoS Signaling Protocols and provisioned QoS resource management. It is designed to be extensible so that other kinds of policy clients may be supported in the future. The model does not make any assumptions about the methods of the policy server, but is based on the server returning decisions to policy requests.

US 2004/0044799 A1 provides a method, a network device and a system for allowing for resuming a preceding incomplete synchronization session. In the system, a communication connection for synchronization of data between a first and a second device is established. The first and the second device comprise each a predefined set of data records to be synchronized. Synchronization related information is exchanged between the first and the second device.

### Summary of the Invention

The objective of the present invention is achieved by the independent claims. The dependent claims relate to preferred aspects of the invention.

### Brief Description of the Drawings

FIG. 1 shows a structure of an L2CM/ANCP;
FIG. 2 is a schematic diagram illustrating some specified configuration processes of the ANCP in the prior art;
FIG. 3 is a schematic diagram illustrating a process of associating a handle with configuration data according to a first embodiment of the present invention;
FIG. 4 is a schematic diagram illustrating a process of synchronizing data by using a handle according to a second embodiment of the present invention;
FIG. 5 is a schematic diagram illustrating the sensing of session disconnection reasons by a control session node according to a third embodiment of the present invention;
FIG. 6 shows a structure of a first network node in a control session according to an embodiment of the present invention;
FIG. 7 shows a structure of a second network node in a control session according to an embodiment of the present invention;
FIG. 8 shows a structure of a system for synchronizing data in a control session according to an embodiment of the present invention; and
FIG. 9 is a schematic diagram illustrating how a system for synchronizing data in a control session is implemented when the first network node is a report execution function and the second network node is a control function according to an embodiment of the present invention.

### Detailed Description of the Invention

Embodiments of the present invention provide a method, device and system for synchronizing data in a control session to synchronize data such as configuration parameters and state information between session nodes in an access network.

In embodiments of the present invention, after a control session is reestablished, data is synchronized between the first network node and the second network node, which are also called the first control session node and the second control session node (for example, the report execution function and control function). The synchronization process includes: transmitting a synchronization message between the first control session node and the second control session node, where the synchronization message includes synchronized data; by a control session node that receives the synchronization message, checking whether the configuration data and state data are consistent (synchronized) in the first control session node and the second control session node; and correcting the inconsistent (unsynchronized) data, where the correction operation includes deletion, update or reconfiguration, that is, deleting the unsynchronized configuration data, resetting (or updating) the unsynchronized configuration data, reconfiguring the configuration data or adjusting the state data.

The preceding configuration data may include data configured for each other by the first control session node and the second control session node through the control session, for example, quality of service (QoS) related configuration data, service related configuration data and subscriber related configuration data set by the first control session node or the second control session node. The preceding state data may include state data notified to each other by the first control session node and the second control session node through the control session, for example, interface state data managed by the first control session node or the second control session node, including access loop bandwidth.

In embodiments of the present invention, a handle is introduced in the control session synchronization process. The handle corresponds to the preceding data (including configuration data and state data) synchronized between the first control session node and the second control session node. The handle is equivalent to the ID of the synchronized data. An association is established between the handle and the synchronized data when the configuration data and state data are managed and controlled through the control session. Then, the association is stored in the control session nodes (for example, the control function and report execution function).

In practical applications, the handle may correspond to the data managed and controlled through a control session or a parameter type or some parameters herein. The preceding handle may be represented by a numeric value, a character string or a parameter type according to particular conditions; for example, it may be represented by sequence No. (SeqNo), transaction identifier (TID), type in the type length value (TLV), management information base (MIB) or other handle type parameters or any combination thereof.

Optionally, the handle may be specified by a node at any end of the control session or by an external device, which includes a policy server.

After the handle is introduced in the control session, the first control session node and the second control session node (for example, the control function and report execution function) may synchronize the data according to the stored handle information and synchronization message that carries the handle after a control session is reestablished.

The following describes a control session related data synchronization process by using the L2CM/ANCP control session as an example. In this embodiment, the BNG acts as the control function, and the access node (AN) acts as the report execution function.

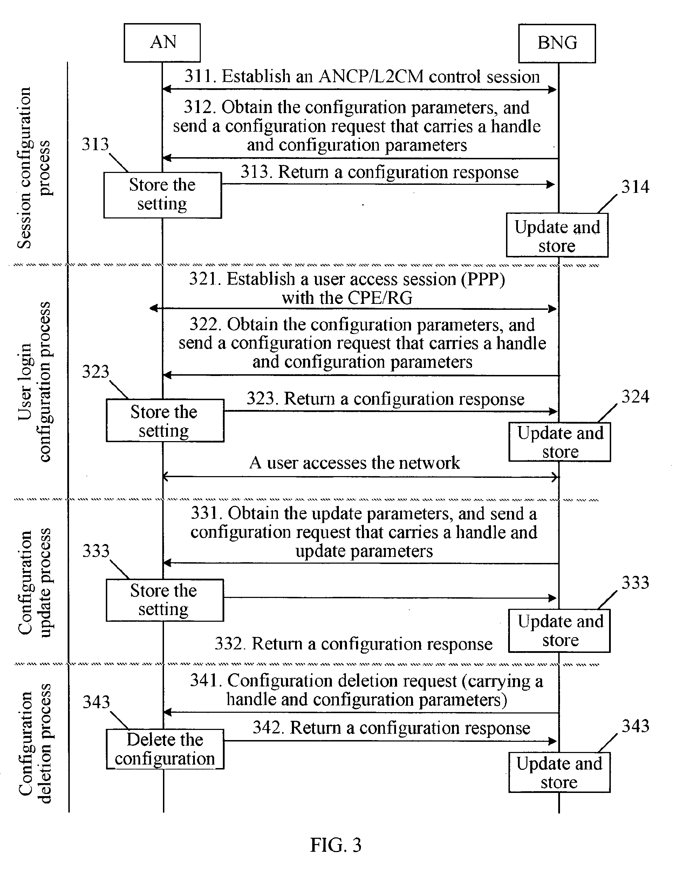

FIG. 3 illustrates a process of associating a handle with the configuration data. The process of associating a handle with the configuration data includes the following four parts: session configuration process, user login configuration process, configuration update process, and configuration deletion process. The following describes these four parts in detail.

### 1. The session configuration process includes the following steps:

Step 311: The BNG establishes an ANCP/L2CM control session with the AN.

Step 312: The BNG obtains configuration parameters provided by the policy server, sends a configuration request to the AN through the established ANCP/L2CM control session, and provides the AN with the obtained configuration parameters through the configuration request.

If the BNG is responsible for specifying a handle, the BNG specifies a handle corresponding to the configuration data, and delivers the configuration parameters and corresponding handle to the AN. The BNG may also store the preceding configuration data and corresponding handle in the configuration data cache.

The preceding BNG may specify a handle according to a configuration request or configuration parameters in the configuration request. Thus, if a configuration request includes multiple configuration parameters, multiple handles may be specified for a configuration request.

The preceding handle may be an explicit parameter, for example, SeqNo or TID, or an implicit parameter, for example, a parameter type and/or a parameter setting point (for example, the ID or logical link ID of a device).

Step 313: After receiving the configuration request, the AN parses the received configuration request, obtains configuration parameters, performs related configuration processing according to the obtained configuration parameters, and returns a configuration response to the BNG. The configuration process includes: setting the obtained configuration parameters in the AN. If the setting succeeds, the AN stores the configuration operation (including configuration parameters or configuration parameters that are set successfully) and the corresponding handle in the configuration data cache. The configuration operation and corresponding handle cached by the AN may be used for data synchronization after the session is restarted. If the setting fails, the AN may not cache the configuration operation (including configuration parameters) and the handle.

The configuration response that the AN returns to the BNG carries the following configuration operation result: if the configuration succeeds, the configuration response includes information indicating configuration success or configuration parameters that are set successfully; if the configuration fails, the configuration response carries information indicating configuration failure.

In practical applications, the handle may be specified by the AN. In this case, the configuration parameters sent by the BNG carry no handle. If the AN successfully configures the configuration parameters sent from the BNG, the AN adds the handle information corresponding to the configuration parameters to the configuration response returned to the BNG.

Step 314: After receiving the configuration response returned by the AN, the BNG obtains the configuration operation result carried in the configuration response. If the configuration response carries the handle information, the BNG updates the cached configuration operation and corresponding handle according to the configuration response.

### 2. The user login configuration process includes the following steps:

Step 321: The BNG establishes a user access session with the AN to implement network services. For example, the user establishes a PPP session.

Step 322: The BNG obtains configuration parameters defined for the user from the policy server according to the user information of the access session, initiates a configuration request for the access session, and sends the configuration parameters to the AN through the configuration request.

If the BNG is responsible for specifying a handle, the BNG specifies a handle corresponding to the configuration operation, and delivers the handle and configuration operation (including configuration parameters) to the AN. The BNG may also store the association between the preceding configuration operation and the handle in the configuration data cache.

Step 323: After receiving the configuration request, the AN performs related configurations and returns a configuration response to the BNG. The configuration process includes: parsing the received configuration request and obtaining configuration parameters and the handle, and setting the obtained configuration parameters in the AN; if the setting succeeds, caching the configuration operation (including configuration parameters) and the handle (in the configuration data cache).

Step 324: After receiving the configuration response returned by the AN, the BNG obtains the configuration operation result carried in the configuration response. If the configuration response carries the handle information, the BNG updates the cached configuration operation (including configuration parameters) and corresponding handle according to the configuration response.

### 3. The configuration update process includes the following steps:

Step 331: The BNG obtains new configuration parameters from the policy server, initiates a configuration update request, and sets the new configuration parameters in the AN through the configuration request. To update the configured parameters, the configuration request includes a new handle; to add configuration parameters, the BNG specifies a handle for the configuration operation if the BNG is responsible for specifying a handle, and delivers the handle and new configuration parameters to the AN.

The BNG may also cache the association between the preceding configuration operation and the handle.

Step 332: After receiving the configuration request, the AN parses the received configuration request, obtains configuration parameters, performs related configurations according to the obtained configuration parameters, and returns a configuration response to the BNG. The configuration process includes: obtaining new configuration parameters and the handle from the configuration request; setting the new configuration parameters in the AN; and storing the updated configuration operation (including configuration parameters) and corresponding handle. If the setting fails, the AN may not cache the configuration operation (including configuration parameters) and handle.

An ACK message in response to the configuration request carries the following configuration operation result: if the setting succeeds, the ACK message may further include configuration parameters that are set successfully; if the setting fails, the ACK message carries information indicating configuration failure.

Step 333: After receiving the ACK message in response to the configuration request from the AN, the BNG obtains the configuration operation result. If the configuration response carries the handle information, the BNG updates the cached configuration operation and corresponding handle according to the configuration response.

### 4. The configuration deletion process includes the following steps:

Step 341: The BNG initiates a configuration deletion request, requesting to delete related configuration parameters from the AN, where the configuration deletion request includes configuration parameters to be deleted and a handle corresponding to the configuration parameters.

Step 342: After receiving the configuration deletion request, the AN parses the received configuration deletion request, obtains the configuration parameters, performs related configuration processing according to the obtained configuration parameters, and returns a configuration response to the BNG. The preceding configuration process includes: deleting the configuration parameters and/or the handle corresponding to the configuration parameters; updating or deleting the association between the configuration operation and the handle in the configuration data cache; and returning an ACK message in response to the configuration request to the BNG.

Step 343: After receiving a configuration response from the AN, the BNG obtains the configuration operation result carried in the configuration response, and updates the cached configuration operation (including configuration parameters and/or state information) and the corresponding handle according to the configuration operation result.

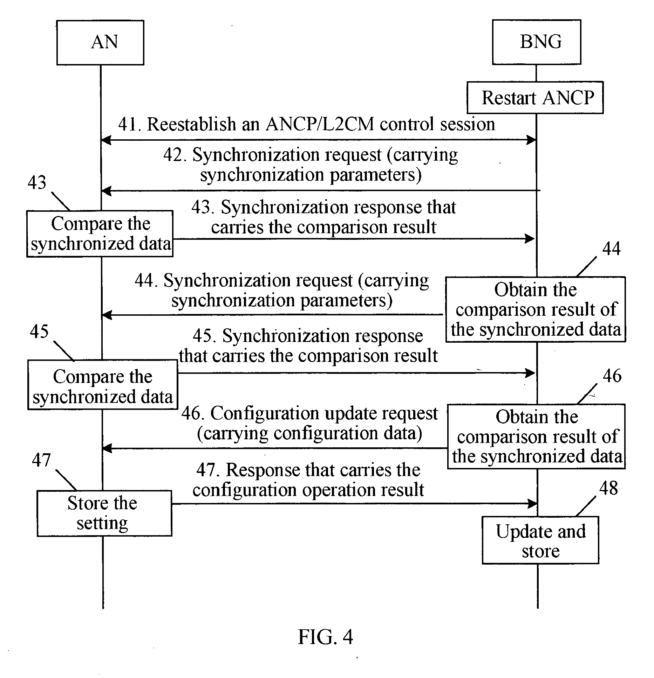

The second embodiment describes a process of synchronizing data by an ANCP/L2CM control session node (including a control function or a report execution function). As shown in FIG. 4, the process includes the following steps:

Step 41: The ANCP/L2CM control session node (including a control function or a report execution function) reestablishes an ANCP/L2CM control session.

Step 42: The ANCP/L2CM control session node judges whether to perform synchronization. If so, the ANCP/L2CM control session node initiates a synchronization request. The ANCP/L2CM control session node may judge whether to perform synchronization according to a lot of conditions, such as the disconnection reason, duration of the disconnection and cached configuration data. For example, after the control session is disconnected due to the switchover, the ANCP/L2CM control session node determines to perform synchronization if the negotiated parameters of the reestablished control session need to remain unchanged.

The ANCP/L2CM control session node that initiates the synchronization request may be the control function or the report execution function. In this embodiment, the ANCP/L2CM control session node is the control function. The synchronization request includes an L2CM report message, an L2CM configuration message or a newly defined synchronization message. The synchronization request includes synchronized data, such as handle information and configuration data corresponding to the handle, where the handle information comes from the configuration data association in the configuration data cache.

Preferably, if the ANCP/L2CM control session node determines not to perform synchronization, the ANCP/L2CM control session node may clear the data that is managed and controlled through the control session.

Step 43: After receiving the synchronization request, the ANCP/L2CM control session node (the report execution function) obtains the preceding synchronized data in the synchronization request, such as handle information. Then, the ANCP/L2CM control session node compares the synchronized data with the data stored in the ANCP/L2CM control session node. For example, it compares the obtained handle with the local handle to obtain consistent and inconsistent handle information; or it compares the synchronized data with the configuration data corresponding to the handle to obtain consistent and inconsistent configuration data information.

The preceding ANCP/L2CM control session node (the report execution function) adds the handle comparison result or the comparison result of the configuration data corresponding to the handle to a response to the synchronization request, and sends the response to the peer control function.

Step 44: After receiving the response to the synchronization request, the control function obtains the comparison result, and determines that the data in the control function is consistent with the data in the report execution function according to the comparison result, that is, the data is synchronized between the control function and the report execution function. In addition, for other unverified configurations, the control function continues to send a synchronization request that carries the synchronized data to the report execution function.

Step 45: After receiving the synchronization request, the report execution function obtains the synchronized data in the synchronization request, such as handle information. Then, the report execution function compares the synchronized data with the data stored in the report execution function. For example, it compares the handle in the handle information with the local handle, and obtains the consistent and inconsistent handle information; or it compares the synchronized data with the configuration data corresponding to the handle, and obtains the consistent and inconsistent configuration data information.

The report execution function adds the handle comparison result or the comparison result of the configuration data corresponding to the handle to a response to the synchronization request, and sends the response to the peer control function.

Step 46: After receiving the response to the synchronization request and obtaining the comparison result, the control function corrects the inconsistent data if determining that the data in the control function is inconsistent (not fully synchronized) with the data in the report execution function according to the comparison result.

The control function may obtain the configuration operation parameters according to the inconsistent handle, and initiate a configuration update request to the report execution function, where the configuration update request includes a handle and configuration parameters corresponding to the handle.

Step 47: After receiving the configuration update request, the report execution function performs related configurations, and returns an ACK message in response to the configuration update request to the control function.

The configuration process includes: obtaining the configuration parameters and a handle from the configuration update request; setting the configuration parameters in the report execution function; if the setting succeeds, storing the new association between the handle and the configuration operation; if the setting fails, not caching the configuration operation and the handle.

The ACK message in response to the configuration update request includes a setting result, for example, setting failure or setting success. If the setting succeeds, the ACK message may further include a handle or configuration parameters that are set successfully.

Step 48: After receiving the ACK message in response to the configuration update request from the report execution function, the control function obtains the configuration operation result, and updates the cached association between the configuration operation and the handle in the configuration data cache according to the configuration operation result.

It should be noted that the preceding synchronization process is only an example and any control session node may initiate a synchronization request. The synchronization message may be a unidirectional notification or a bidirectional request/ACK message. In this embodiment, the synchronization message is a bidirectional request/ACK message.

The unidirectional notification carries only a synchronization request. The report execution function notifies the control function of its own handle information and configuration data corresponding to the handle through the synchronization request. The control function compares the handle and configuration data corresponding to the handle sent by the report execution function with the local handle information and configuration data corresponding to the handle, and obtains the inconsistent configuration data information. Then, the control function corrects the inconsistent configuration data. The correction operation includes deleting the inconsistent configuration data or reconfiguring the inconsistent configuration data. In this embodiment, the correction operation is reconfiguring the inconsistent configuration data. The step of deleting the inconsistent configuration data includes deleting the inconsistent configuration data stored in the control session node or notifying the control session peer node of deleting the inconsistent configuration data. For example, the control function notifies the report execution function of deleting the inconsistent configuration data.

This embodiment also provides a state data synchronization process. The process includes the following steps:
Step 1: The ANCP/L2CM control session node reestablishes an ANCP/L2CM control session. In this embodiment, the first control session node is the report execution function, and the second control session node is the control function.
Step 2: The report execution function judges whether to synchronize the state data. If so, the report execution function initiates a state data synchronization request to the control function, where the request includes an L2CM report message and a newly defined synchronization message. The state data synchronization request carries state data and an implicit handle, where the implicit handle includes a device ID or logical link ID of a device or a state type; the state data includes a link bandwidth and a link state, for example, bandwidth of the digital subscriber line (DSL), activation or deactivation state of the DSL, and comes from negotiated parameters of the port of the report execution function.

The control session node may judge whether to perform synchronization according to a lot of conditions, for example, disconnection reason, duration of the disconnection or cached configuration data. The control session node may also judge whether to synchronize the state data according to the state changes during the period of disconnection (from the time when the session is disconnected to the time when the synchronization begins). If no state change occurs, the control session node determines not to synchronize the state data; otherwise, the control session node synchronizes the data with state changes. The state changes include changes in the link bandwidth and link state.

Step 3: After receiving the preceding state synchronization request, the control function obtains the state data carried in the state synchronization request, and updates the locally cached state data. Then, the control function may send an ACK message in response to the state synchronization request to the report execution function.

In practical applications, the state data and the configuration data may be synchronized in any sequence. For example, the state data may be synchronized before or after the configuration data is synchronized. The unsynchronized configuration data may be uniformly corrected after the configuration data is synchronized or by times (that is, the unsynchronized configuration data may be corrected each time when the check is performed). The state data and the configuration data may be synchronized according to particular requirements; that is, the control session may select one of the state data and the configuration data for synchronization.

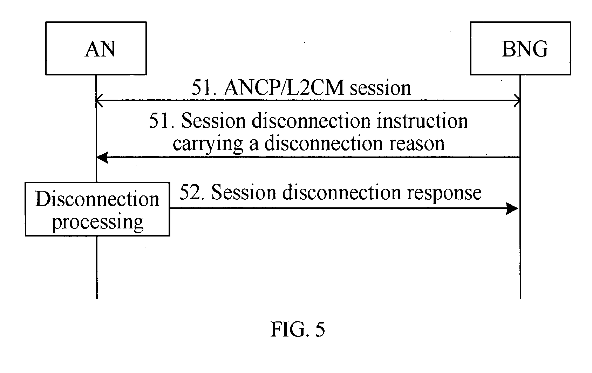

The third embodiment describes a process of sensing the reason why the ANCP/L2CM control session is disconnected and notifying the peer node of the disconnection reason by the ANCP/L2CM control session node (including a control function or a report execution function). The ANCP/L2CM control session node may determine whether to perform synchronization according to the disconnection reason at the time of restart. As shown in FIG. 5, the process provided in the third embodiment includes the following steps:
Step 51: An ANCP/L2CM control session is already established between the ANCP/L2CM control session nodes (including a control function or a report execution function). If a control session node (for example, the control function) wants to disconnect the control session, the control session node sends a session disconnection instruction that carries disconnection reasons to the peer session node.

The control session disconnection is categorized into two types: session disconnection initiated by a control session node and disconnection between the control session nodes detected by a control session node. The detected disconnection includes session disconnection detected by a control session node through keep-alive or other means. For example, the control session node detects that the link carrying the session is disconnected through the Operation, Administration and Maintenance (OAM).

In the third embodiment, the session disconnection instruction includes an L2CM report message, an L2CM configuration message, a newly defined disconnection instruction, and a GSMP adjacency protocol message. The preceding disconnection reason may be as follows: the ANCP/L2CM control session is disconnected after the ANCP/L2CM control session node receives a management or control command (for example, a command sent from the NMS, command line interface or policy server); the ANCP/L2CM control session is disconnected after the switchover of the ANCP/L2CM control session node takes place; and the ANCP/L2CM control session times out. The disconnection instruction may further carry the duration of disconnection.

Step 52: After receiving the session disconnection instruction, the control session node obtains the disconnection reason carried in the session disconnection instruction, and disconnects the session according to the disconnection reason. For example, if the session is disconnected due to the switchover of the control session node, the control session node disconnects the session only without operating the configuration data or state data of the session control. If the session is disconnected due to the update and maintenance of the control session node, the control session node clears the session, including deleting the session related configuration data.

After receiving the disconnection instruction, the preceding control session node may send an ACK message in response to the session disconnection instruction to the control session node that initiates the session disconnection instruction.

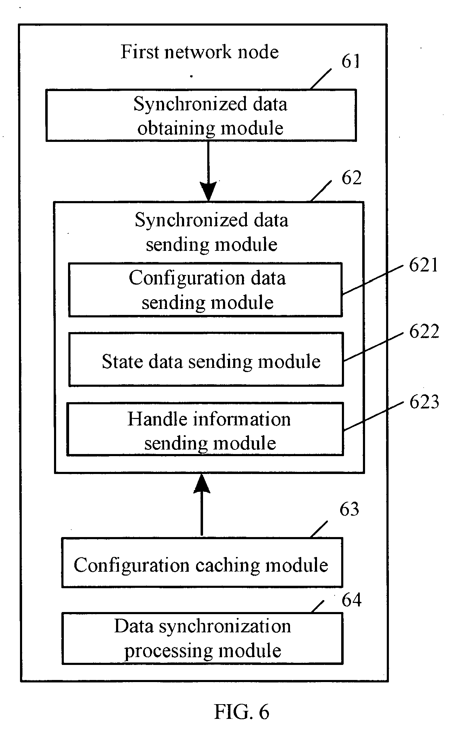

This embodiment also provides a control session node, which may be a control function or a report execution function. FIG. 6 shows a structure of a first network node in a control session in an embodiment of the present invention. The first network node includes:
a synchronized data obtaining module 61, configured to obtain the local synchronized data in a control session after the control session is reestablished, where the synchronized data includes at least one of configuration data, state data and handle, where the handle corresponds to the configuration data or state data in the first network node; and
a synchronization message sending module 62, configured to send a synchronization message that carries the synchronized data obtained by the synchronized data obtaining module to a control session peer node, notifying the control session peer node of synchronizing data.

The synchronization message sending module 62 may include:
a configuration data sending module 621, configured to send a synchronization message that carries the configuration data of the local network node to the control session peer node;
a state data sending module 622, configured to send a synchronization message that carries the state data of the local network node to the control session peer node; and
a handle information sending module 623, configured to send a synchronization message that carries the handle information to the control session peer node.

The first network node may further include:
a configuration caching unit 63, configured to store the association between the handle number and the configuration data or the state data; and
a data synchronization processing module 64, configured to: receive a response to the synchronization message from the control session peer node, where the response carries the comparison result of the synchronized data between the control session peer node and the local network node, and synchronize data according to the comparison result.

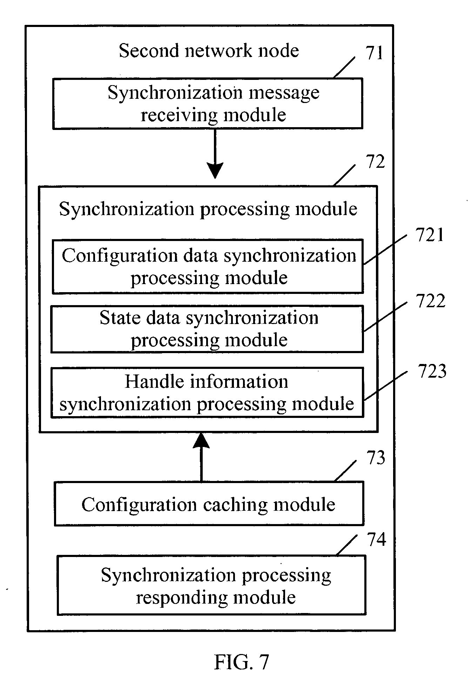

FIG. 7 shows a structure of a second network node in a control session in an embodiment of the present invention. The second network node includes:
a synchronization message receiving module 71, configured to receive a synchronization message that carries the synchronized data after a control session is reestablished, where the synchronized data includes at least one of configuration data, state data and handle, where the handle corresponds to the configuration data or the state data in the first network node; and
a synchronization processing module 72, configured to synchronize data according to the synchronized data carried in the synchronization message that is received by the synchronization message receiving module.

The synchronization processing module 72 may include at least one of a configuration data synchronization processing module 721, a state data synchronization processing module 722 and a handle information synchronization processing module 723.

The configuration data synchronization processing module 721 is configured to: obtain configuration data of the control session peer node carried in the synchronization message, compare the configuration data with the stored configuration data, and correct the inconsistent data upon comparison.

The state data synchronization processing module 722 is configured to: obtain the state data carried in the synchronized data, and update the stored state data according to the obtained state data.

The handle information synchronization processing module 723 is configured to: obtain the handle carried in the synchronized data, compare the handle with the stored handle, and correct the configuration data corresponding to the inconsistent handle or update the state data corresponding to the inconsistent handle.

The second network node may further include:
a configuration caching unit 73, configured to store the association between the handle number and the configuration data or the state data; and
a synchronization processing responding module 74, configured to send a response to the synchronization message to the control session peer node after the data is synchronized, where the response includes at least one of the comparison result of the synchronized data between the network node and the control session peer node and the data synchronization processing result.

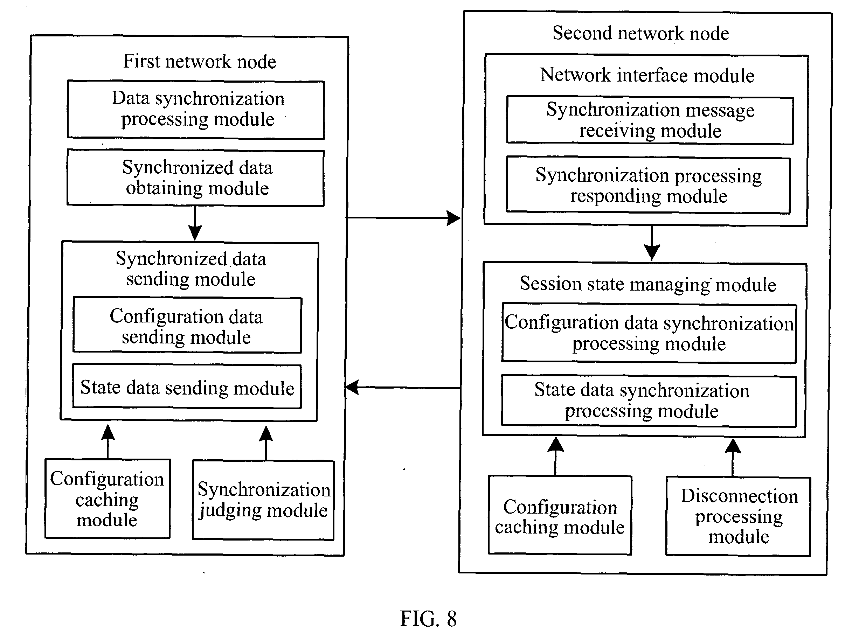

FIG. 8 shows a structure of a system for synchronizing data in a control session in an embodiment of the present invention. The system includes the first network node shown in FIG. 6 and the second network node shown in FIG. 7.

The first network node and the second network node may be a control function and a report execution function. The control function establishes an ANCP/L2CM control session with the report execution function. The control function is integrated into an NAS device, for example, the BNG, BRAS, or IP Edge. The report execution function is integrated into an AN, for example, the DSLAM.

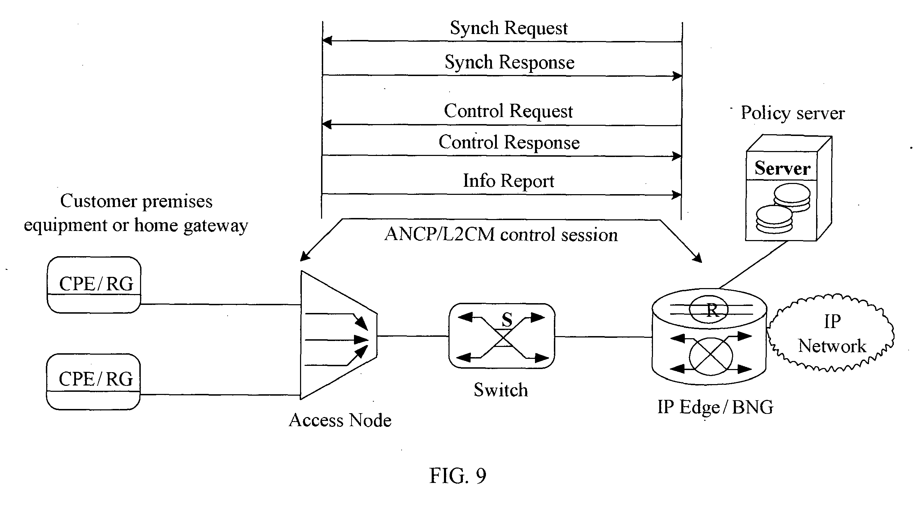

FIG. 9 illustrates how the system for synchronizing data in a control session is implemented when the first network node is a report execution function and the second network node is a control function in an embodiment of the present invention.

The control function controls and manages the report execution function through the ANCP/L2CM control session; for example, it configures parameters for the report execution function. The report execution function responds to the control request of the control function, and reports certain state information to the control function. For example, it reports the port state information (including line bandwidth).

The control function and the report execution function support steady restart of the ANCP/L2CM control session upon disconnection. In addition, after the ANCP/L2CM control session is restarted steadily, the configuration data and state data can be synchronized between the control function and the report execution function.

The control function and the report execution function may also notify each other of the reason why the ANCP/L2CM control session is disconnected.

In conclusion, in embodiments of the present invention, the data is synchronized between the control session nodes, and the network error and even denial of service due to out-of-synchronization of the data between the session nodes are solved. In addition, the data can be synchronized after the session is steadily restarted; the control plane is separate from the data plane; the robustness of the network is increased; network failures are reduced; high reliability required by some services is guaranteed; and the satisfaction of network users is improved. The scope of the invention is defined by the appended claims.

## Claims

1. A method for synchronizing data in a control session, the method comprising:
after reestablishing a control session, the control session being a Layer 2 Control Mechanism, L2CM, or an Access Node Control Protocol, ANCP, receiving, by a second network node, a synchronization message that carries synchronized data in the control session from a first network node, said first and second network nodes being ANCP or L2CM control session nodes, wherein:
the synchronized data comprises at least configuration data, state data and a handle;
wherein the handle is equivalent to the ID of the synchronized data and corresponds to the configuration data and state data in the first network node;
and wherein the state data includes a link bandwidth, said link bandwidth being a bandwidth of a digital subscriber line, DSL, and a link state, said link state being an activation or deactivation state of the DSL; and
the first network node and the second network node are in an access network; and
parsing, by the second network node, the synchronization message, obtaining the synchronized data, and synchronizing data according to the synchronized data,
wherein the synchronizing data according to the synchronized data comprises:
obtaining, by the second network node, the handle carried in the synchronized data, comparing the obtained handle with a handle in the second network node, and correcting configuration data or updating state data corresponding to the inconsistent handle upon comparison.

2. The method of claim 1, further comprising:
after reestablishing the control session, obtaining, by the first network node, synchronized data in the control session in the first network node; and
sending a synchronization message that carries the synchronized data to the second network node, wherein the synchronization message is used to notify the second network node of the synchronized data.

3. The method of claim 2, further comprising:
receiving, by the first network node, a response to the synchronization message from the second network node, wherein the response carries a comparison result of the synchronized data between the first network node and the second network node, and synchronizing data according to the comparison result.

4. A first network node in a control session, said first network node being ANCP or L2CM control session node, comprising:
a synchronized data obtaining module (61), configured to obtain local synchronized data in a control session, the control session being a Layer 2 Control Mechanism, L2CM, or an Access Node Control Protocol, ANCP, after the control session is reestablished, wherein:
the synchronized data comprises at least configuration data, state data and a handle;
the handle is equivalent to the ID of the synchronized data and corresponds to configuration data and state data in the first network node;
and wherein the state data includes a link bandwidth, said link bandwidth being a bandwidth of a digital subscriber line, DSL, and a link state, said link state being an activation or deactivation state of the DSL; and
the first network node is in an access network, said first network node being an ANCP or L2CM control session node; and
a synchronization message sending module (62), configured to send a synchronization message that carries the synchronized data obtained by the synchronized data obtaining module to a control session peer node, notifying the control session peer node of the synchronized data.

5. The first network node of claim 4, wherein the synchronization message sending module (62) at least comprises one of the following modules:
a configuration data sending module (621), configured to send a synchronization message that carries configuration data of the local network node to the control session peer node;
a state data sending module (622), configured to send a synchronization message that carries state data of the local network node to the control session peer node; and
a handle information sending module (623), configured to send a synchronization message that carries handle information to the control session peer node.

6. The first network node of claim 5, further comprising:
a configuration caching unit (63), configured to store an association between a handle number and configuration data or state data.

7. The first network node of claim 4, 5 or 6, further comprising:
a data synchronization processing module (64), configured to: receive a response to the synchronization message from the control session peer node, wherein the response carries a comparison result of the synchronized data between the control session peer node and the local network node, and synchronize data according to the comparison result.

8. A second network node in a control session, comprising:
a synchronization message receiving module (71), configured to receive from a first network mode a synchronization message that carries synchronized data after a control session is reestablished, the control session being a Layer 2 Control Mechanism, L2CM, or an Access Node Control Protocol, ANCP, wherein:
the synchronized data comprises at least configuration data, state data and a handle;
the handle is equivalent to the ID of the synchronized data and corresponds to configuration data and state data in a first network node;
and wherein the state data includes a link bandwidth, said link bandwidth being a bandwidth of a digital subscriber line, DSL, and a link state, said link state being an activation or deactivation state of the DSL; and
the first network node and the second network node are in an access network, said first and second network nodes being ANCP or L2CM control session nodes; and
a synchronization processing module (72), configured to synchronize data according to the synchronized data carried in the synchronization message received by the synchronization message receiving module, wherein the synchronization processing module (72) comprises a handle information synchronization processing module (723) configured to obtain the handle carried in the synchronized data, compare the obtained handle with handle information in the handle information synchronization processing module, and correct configuration data corresponding to the inconsistent handle, or update state data corresponding to the inconsistent handle upon comparison.

9. The second network node of claim 8, wherein the synchronization processing module (72) comprises at least one of a configuration data synchronization processing module (721), a state data synchronization processing module (722), wherein:
the configuration data synchronization processing module (721) is configured to: obtain the configuration data of the control session peer node carried in the synchronization message, compare the obtained configuration data with configuration data in the configuration data synchronization processing module, and correct inconsistent configuration data upon comparison;
the state data synchronization processing module (722) is configured to: obtain the state data carried in the synchronized data, and update state data in the state data synchronization processing module according to the obtained state data.

10. The second network node of claim 9, further comprising:
a configuration caching unit (73), configured to store an association between a handle number and configuration data or state data.

11. The second network node of claim 8, 9 or 10, further comprising:
a synchronization processing responding module (74), configured to send a response to the synchronization message to the first nework node after the data is synchronized, wherein the response comprises at least one of a comparison result of the synchronized data between the network node and the first network node and a data synchronization processing result.

12. A system for synchronizing data in a control session, comprising
the first network node of any one of claims 4 to 7 and the second network node of any one of claims 8 to 11, where the first network node sends a synchronization message that carries the synchronized data to the second network node after the control session is reestablished, and the second network node synchronizes the data according to the synchronized data carried in the synchronization message.

## Patentansprüche

1. Verfahren zum Synchronisieren von Daten in einer Steuersitzung, wobei das Verfahren Folgendes umfasst:
nach dem erneuten Aufbauen einer Steuersitzung, wobei die Steuersitzung ein Schicht-2-Steuermechanismus, L2CM, oder ein Zugangsknotensteuerprotokoll, ANCP, ist, Empfangen einer Synchronisationsnachricht, die synchronisierte Daten führt, in der Steuersitzung durch einen zweiten Netzknoten von einem ersten Netzknoten, wobei der erste und der zweite Netzknoten ANCP- oder L2CM-Steuersitzungsknoten sind, wobei:
die synchronisierten Daten wenigstens Konfigurationsdaten, Zustandsdaten und ein Pseudonym umfassen;
wobei das Pseudonym zu der ID der synchronisierten Daten äquivalent ist und den Konfigurationsdaten und den Zustandsdaten in dem ersten Netzknoten entspricht;
und wobei die Zustandsdaten eine Verbindungsbandbreite, wobei die Verbindungsbandbreite eine Bandbreite einer digitalen Teilnehmerleitung, DSL, ist,
und einen Verbindungszustand, wobei der Verbindungszustand ein Aktivierungs- oder ein Deaktivierungszustand der DSL ist, enthalten; und
der erste Netzknoten und der zweite Netzknoten in einem Zugangsnetz sind; und
Analysieren der Synchronisationsnachricht durch den zweiten Netzknoten, Erfassen der synchronisierten Daten, und Synchronisieren von Daten gemäß den synchronisierten Daten,
wobei das Synchronisieren von Daten gemäß den synchronisierten Daten Folgendes umfasst:
Erfassen des Pseudonyms, das in den synchronisierten Daten geführt wird, durch den zweiten Netzknoten, Vergleichen des erfassten Pseudonyms mit einem Pseudonym in dem zweiten Netzknoten und Korrigieren von Konfigurationsdaten oder Aktualisieren von Zustandsdaten entsprechend dem inkonsistenten Pseudonym nach dem Vergleich.

2. Verfahren nach Anspruch 1, das ferner Folgendes umfasst:
nach dem erneuten Aufbauen der Steuersitzung Erfassen von synchronisierten Daten in der Steuersitzung in dem ersten Netzknoten durch den ersten Netzknoten; und
Senden einer Synchronisationsnachricht, die die synchronisierten Daten führt, zu dem zweiten Netzknoten, wobei die Synchronisationsnachricht verwendet wird, um dem zweiten Netzknoten die synchronisierten Daten zu melden.

3. Verfahren nach Anspruch 2, das ferner Folgendes umfasst:
Empfangen einer Antwort auf die Synchronisationsnachricht durch den ersten Netzknoten von dem zweiten Netzknoten, wobei die Antwort ein Vergleichsergebnis der synchronisierten Daten zwischen dem ersten Netzknoten und dem zweiten Netzknoten führt, und Synchronisieren der Daten gemäß dem Vergleichsergebnis.

4. Erster Netzknoten in einer Steuersitzung, wobei der erste Netzknoten ein ANCP- oder L2CM-Steuersitzungsknoten ist, der Folgendes umfasst:
ein Erfassungsmodul (61) für synchronisierte Daten, das konfiguriert ist, lokale synchronisierte Daten in einer Steuersitzung zu erfassen, wobei die Steuersitzung ein Schicht-2-Steuermechanismus, L2CM, oder ein Zugangsknotensteuerprotokoll, ANCP, ist, nachdem die Steuersitzung erneut aufgebaut wurde, wobei:
die synchronisierten Daten wenigstens Konfigurationsdaten, Zustandsdaten und ein Pseudonym umfassen;
das Pseudonym zu der ID der synchronisierten Daten äquivalent ist und Konfigurationsdaten und Zustandsdaten in dem ersten Netzknoten entspricht;
und wobei die Zustandsdaten eine Verbindungsbandbreite, wobei die Verbindungsbandbreite eine Bandbreite einer digitalen Teilnehmerleitung, DSL, ist, und einen Verbindungszustand, wobei der Verbindungszustand ein Aktivierungs- oder ein Deaktivierungszustand der DSL ist, enthalten; und
der erste Netzknoten in einem Zugangsnetz ist, wobei der erste Netzknoten ein ANCP- oder L2CM-Steuersitzungsknoten ist; und
ein Synchronisationsnachrichtensendemodul (62), das konfiguriert ist, eine Synchronisationsnachricht, die die synchronisierten Daten, die von dem Modul zum Erfassen von synchronisierten Daten erfasst werden, führt, zu einem Partnerknoten der Steuersitzung zu senden, die dem Partnerknoten der Steuersitzung die synchronisierten Daten meldet.

5. Erster Netzknoten nach Anspruch 4, wobei das Synchronisationsnachrichtensendemodul (62) wenigstens eines der folgenden Module umfasst:
ein Konfigurationsdatensendemodul (621), das konfiguriert ist, eine Synchronisationsnachricht, die Konfigurationsdaten des lokalen Netzknotens führt, zu dem Partnerknoten der Steuersitzung zu senden;
ein Zustandsdatensendemodul (622), das konfiguriert ist, eine Synchronisationsnachricht, die Zustandsdaten des lokalen Netzknotens führt, zu dem Partnerknoten der Steuersitzung zu senden; und
ein Pseudonyminformationssendemodul (623), das konfiguriert ist, eine Synchronisationsnachricht, die Pseudonyminformationen führt, zu dem Partnerknoten der Steuersitzung zu senden.

6. Erster Netzknoten nach Anspruch 5, der ferner Folgendes umfasst:
eine Konfigurationszwischenspeichereinheit (63), die konfiguriert ist, eine Beziehung zwischen einer Pseudonymnummer und Konfigurationsdaten oder Zustandsdaten zu speichern.

7. Erster Netzknoten nach Anspruch 4, 5 oder 6, der ferner Folgendes umfasst:
ein Datensynchronisationsverarbeitungsmodul (64), das konfiguriert ist: eine Antwort auf die Synchronisationsnachricht von dem Partnerknoten der Steuersitzung zu empfangen, wobei die Antwort ein Vergleichsergebnis der synchronisierten Daten zwischen dem Partnerknoten der Steuersitzung und dem lokalen Netzknoten führt, und Daten gemäß dem Vergleichsergebnis zu synchronisieren.

8. Zweiter Netzknoten in einer Steuersitzung, der Folgendes umfasst:
ein Synchronisationsnachrichtenempfangsmodul (71), das konfiguriert ist, von einem ersten Netzknoten eine Synchronisationsnachricht, die synchronisierte Daten führt, zu empfangen, nachdem eine Steuersitzung erneut aufgebaut wurde, wobei die Steuersitzung ein Schicht-2-Steuermechanismus, L2CM, oder ein Zugangsknotensteuerprotokoll, ANCP, ist, wobei:
die synchronisierten Daten wenigstens Konfigurationsdaten, Zustandsdaten und ein Pseudonym umfassen;
das Pseudonym zu der ID der synchronisierten Daten äquivalent ist und Konfigurationsdaten und Zustandsdaten in einem ersten Netzknoten entspricht;
und wobei die Zustandsdaten eine Verbindungsbandbreite, wobei die Verbindungsbandbreite eine Bandbreite einer digitalen Teilnehmerleitung, DSL, ist, und einen Verbindungszustand, wobei der Verbindungszustand ein Aktivierungs- oder ein Deaktivierungszustand der DSL ist, enthalten; und
der erste Netzknoten und der zweite Netzknoten in einem Zugangsnetz sind, wobei der erste und der zweite Netzknoten ANCP- oder L2CM-Steuersiztungsknoten sind; und
ein Synchronisationsverarbeitungsmodul (72), das konfiguriert ist, Daten gemäß den synchronisierten Daten, die in der Synchronisationsnachricht, die von dem Synchronisationsnachrichtenempfangsmodul empfangen werden, geführt werden, zu synchronisieren,
wobei das Synchronisationsverarbeitungsmodul (72) ein Pseudonyminformationssynchronisationsverarbeitungsmodul (723) umfasst, das konfiguriert ist, das Pseudonym, das in den Synchronisationsdaten geführt ist, zu erfassen, das erfasste Pseudonym mit Pseudonyminformationen in dem Pseudonyminformationssynchronisationsverarbeitungsmodul zu vergleichen und Konfigurationsdaten entsprechend dem inkonsistenten Pseudonym zu korrigieren oder Zustandsdaten entsprechend dem inkonsistenten Pseudonym nach dem Vergleich zu aktualisieren.

9. Zweiter Netzknoten nach Anspruch 8, wobei das Synchronisationsverarbeitungsmodul (72) ein Konfigurationsdatensynchronisationsverarbeitungsmodul (721) und/oder ein Zustandsdatensynchronisationsverarbeitungsmodul (722) umfasst, wobei:
das Konfigurationsdatensynchronisationsverarbeitungsmodul (721) konfiguriert ist: die Konfigurationsdaten des Partnerknotens der Steuersitzung, die in der Synchronisationsnachricht geführt werden, zu erfassen, die erfassten Konfigurationsdaten mit Konfigurationsdaten in dem Konfigurationsdatensynchronisationsverarbeitungsmodul zu vergleichen und inkonsistente Konfigurationsdaten nach dem Vergleich zu korrigieren;
das Zustandsdatensynchronisationsverarbeitungsmodul (722) konfiguriert ist: die Zustandsdaten, die in den Synchronisationsdaten geführt werden, zu erfassen und die Zustandsdaten in dem Zustandsdatensynchronisationsverarbeitungsmodul gemäß den erfassten Zustandsdaten zu aktualisieren.

10. Zweiter Netzknoten nach Anspruch 9, der ferner Folgendes umfasst:
eine Konfigurationszwischenspeichereinheit (73), die konfiguriert ist, eine Beziehung zwischen einer Pseudonymnummer und Konfigurationsdaten oder Zustandsdaten zu speichern.

11. Zweiter Netzknoten nach Anspruch 8, 9 oder 10, der ferner Folgendes umfasst:
ein Synchronisationsverarbeitungsantwortmodul (74), das konfiguriert ist, eine Antwort auf die Synchronisationsnachricht zu dem ersten Netzknoten zu senden, nachdem die Daten synchronisiert sind, wobei die Antwort ein Vergleichsergebnis der synchronisierten Daten zwischen dem Netzknoten und dem ersten Netzknoten und/oder ein Datensynchronisationsverarbeitungsergebnis umfasst.

12. System zum Synchronisieren von Daten in einer Steuersitzung, das Folgendes umfasst:
den ersten Netzknoten nach einem der Ansprüche 4 bis 7 und den zweiten Netzknoten nach einem der Ansprüche 8 bis 11, wobei der erste Netzknoten eine Synchronisationsnachricht, die die synchronisierten Daten führt zu dem zweiten Netzknoten sendet, nachdem die Steuersitzung erneut aufgebaut wurde, und der zweite Netzknoten die Daten gemäß den synchronisierten Daten, die in der Synchronisationsnachricht geführt werden, synchronisiert.

## Revendications

1. Procédé de synchronisation de données dans une session de commande, le procédé comprenant :
après le rétablissement d'une session de commande, la session de commande étant un Mécanisme de Commande de Couche 2, L2CM (Layer 2 Control Mechanism), ou un Protocole de Commande de Noeud d'Accès, ANCP (Access Node Control Protocol), la réception, par un second noeud de réseau, d'un message de synchronisation qui achemine des données synchronisées dans la session de commande en provenance d'un premier noeud de réseau, lesdits premier et second noeuds de réseau étant des noeuds de session de commande ANCP ou L2CM, dans lequel :
les données synchronisées comprennent au moins des données de configuration, des données d'état et un descripteur ;
dans lequel le descripteur est équivalent à l'ID des données synchronisées et correspond aux données de configuration et aux données d'état contenues dans le premier noeud de réseau ; et
dans lequel les données d'état contiennent une largeur de bande de la liaison, ladite largeur de bande de la liaison étant une largeur de bande d'une ligne d'abonné numérique, DSL (Digital Subscriber Line), et un état de la liaison, ledit état de la liaison étant un état d'activation ou de désactivation de la DSL ; et
le premier noeud de réseau et le second noeud de réseau sont dans un réseau d'accès ; et
l'analyse syntaxique, par le second noeud de réseau, du message de synchronisation, l'obtention des données synchronisées et la synchronisation de données conformément aux données synchronisées,
dans lequel la synchronisation de données conformément aux données synchronisées comprend :
l'obtention, par le second noeud de réseau, du descripteur acheminé dans les données synchronisées, la comparaison du descripteur obtenu à un descripteur contenu dans le second noeud de réseau, et la correction de données de configuration ou la mise à jour de données d'état correspondant au descripteur incohérent lors de la comparaison.

2. Procédé selon la revendication 1, comprenant en outre :
après le rétablissement de la session de commande, l'obtention, par le premier noeud de réseau, de données synchronisées lors de la session de commande dans le premier noeud de réseau ; et
l'envoi d'un message de synchronisation qui achemine les données synchronisées au second noeud de réseau, le message de synchronisation étant utilisé pour notifier les données synchronisées au second noeud de réseau.

3. Procédé selon la revendication 2, comprenant en outre :
la réception, par le premier noeud de réseau, d'une réponse au message de synchronisation provenant du second noeud de réseau, la réponse acheminant un résultat de comparaison des données synchronisées entre le premier noeud de réseau et le second noeud de réseau, et la synchronisation de données conformément au résultat de comparaison.

4. Premier noeud de réseau dans une session de commande, ledit premier noeud de réseau étant un noeud de session de commande ANCP ou L2CM, comprenant :
un module d'obtention de données synchronisées (61), configuré pour obtenir des données synchronisées locales lors d'une session de commande, la session de commande étant un Mécanisme de Commande de Couche 2, L2CM, ou un Protocole de Commande de Noeud d'Accès, ANCP, après que la session de commande a été rétablie, dans lequel :
les données synchronisées comprennent au moins des données de configuration, des données d'état et un descripteur ;
le descripteur est équivalent à l'ID des données synchronisées et correspond à des données de configuration et à des données d'état contenues dans le premier noeud de réseau ;
et dans lequel les données d'état contiennent une largeur de bande de la liaison, ladite largeur de bande de la liaison étant une largeur de bande d'une ligne d'abonné numérique, DSL, et un état de la liaison, ledit état de la liaison étant un état d'activation ou de désactivation de la DSL ; et
le premier noeud de réseau est dans un réseau d'accès, ledit premier noeud de réseau étant un noeud de session de commande ANCP ou L2CM ; et
un module d'envoi de message de synchronisation (62), configuré pour envoyer un message de synchronisation qui achemine les données synchronisées obtenues par le module d'obtention de données synchronisées à un noeud homologue de session de commande, en notifiant les données synchronisées au noeud homologue de session de commande.

5. Premier noeud de réseau selon la revendication 4, dans lequel le module d'envoi de message de synchronisation (62) comprend au moins l'un des modules suivants :
un module d'envoi de données de configuration (621), configuré pour envoyer un message de synchronisation qui achemine des données de configuration du noeud de réseau local au noeud homologue de session de commande ;
un module d'envoi de données d'état (622), configuré pour envoyer un message de synchronisation qui achemine des données d'état du noeud de réseau local au noeud homologue de session de commande ; et
un module d'envoi d'informations de descripteur (623), configuré pour envoyer un message de synchronisation qui achemine des informations de descripteur au noeud homologue de session de commande.

6. Premier noeud de réseau selon la revendication 5, comprenant en outre :
une unité de mise en antémémoire de configuration (63), configurée pour stocker une association entre un numéro de descripteur et des données de configuration ou des données d'état.

7. Premier noeud de réseau selon la revendication 4, 5 ou 6, comprenant en outre :
un module de traitement de synchronisation de données (64), configuré pour recevoir une réponse au message de synchronisation en provenance du noeud homologue de session de commande, dans lequel la réponse achemine un résultat de comparaison des données synchronisées entre le noeud homologue de session de commande et le noeud de réseau local, et pour synchroniser des données conformément au résultat de comparaison.

8. Second noeud de réseau dans une session de commande, comprenant :
un module de réception de message de synchronisation (71), configuré pour recevoir, en provenance d'un premier noeud de réseau, un message de synchronisation qui achemine des données synchronisées après qu'une session de commande a été rétablie, la session de commande étant un Mécanisme de Commande de Couche 2, L2CM, ou un Protocole de Commande de Noeud d'Accès, ANCP, dans lequel :
les données synchronisées comprennent au moins des données de configuration, des données d'état et un descripteur ;
le descripteur est équivalent à l'ID des données synchronisées et correspond à des données de configuration et à des données d'état contenues dans un premier noeud de réseau ;
et dans lequel les données d'état contiennent une largeur de bande de la liaison, ladite largeur de bande de la liaison étant une largeur de bande d'une ligne d'abonné numérique, DSL, et un état de la liaison, ledit état de la liaison étant un état d'activation ou de désactivation de la DSL ; et
le premier noeud de réseau et le second noeud de réseau sont dans un réseau d'accès, lesdits premier et second noeuds de réseau étant des noeuds de session de commande ANCP ou L2CM ; et
un module de traitement de synchronisation (72), configuré pour synchroniser des données conformément aux données synchronisées acheminées dans le message de synchronisation reçu par le module de réception de message de synchronisation, dans lequel le module de traitement de synchronisation (72) comprend un module de traitement de synchronisation d'informations de descripteur (723) configuré pour obtenir le descripteur acheminé dans les données synchronisées, pour comparer le descripteur obtenu à des informations de descripteur dans le module de traitement de synchronisation d'informations de descripteur, et pour corriger des données de configuration correspondant au descripteur incohérent ou pour mettre à jour des données d'état correspondant au descripteur incohérent lors de la comparaison.

9. Second noeud de réseau selon la revendication 8, dans lequel le module de traitement de synchronisation (72) comprend au moins l'un d'un module de traitement de synchronisation de données de configuration (721) et d'un module de traitement de synchronisation de données d'état (722), dans lequel :
le module de traitement de synchronisation de données de configuration (721) est configuré pour : obtenir les données de configuration du noeud homologue de session de commande acheminées dans le message de synchronisation, comparer les données de configuration obtenues à des données de configuration dans le module de traitement de synchronisation de données de configuration, et corriger des données de configuration incohérentes lors de la comparaison ;
le module de traitement de synchronisation de données d'état (722) est configuré pour : obtenir les données d'état acheminées dans les données synchronisées, et mettre à jour des données d'état dans le module de traitement de synchronisation de données d'état conformément aux données d'état obtenues.

10. Second noeud de réseau selon la revendication 9, comprenant en outre :
une unité de mise en antémémoire de configuration (73), configurée pour stocker une association entre un numéro de descripteur et des données de configuration ou des données d'état.

11. Second noeud de réseau selon la revendication 8, 9 ou 10, comprenant en outre :
un module de réponse au traitement de synchronisation (74), configuré pour envoyer une réponse au message de synchronisation au premier noeud de réseau après que les données ont été synchronisées, la réponse comprenant au moins l'un d'un résultat de comparaison des données synchronisées entre le noeud de réseau et le premier noeud de réseau et d'un résultat du traitement de synchronisation de données.

12. Système de synchronisation de données dans une session de commande, comprenant :
le premier noeud de réseau selon l'une quelconque des revendications 4 à 7 et le second noeud de réseau selon l'une quelconque des revendications 8 à 11, le premier noeud de réseau envoyant un message de synchronisation qui achemine les données synchronisées au second noeud de réseau après que la session de commande a été rétablie, et le second noeud de réseau synchronisant les données conformément aux données synchronisées acheminées dans le message de synchronisation
